Europäisches Patentamt

European Patent Office

Office européen des brevets

(11) Publication number: **0 055 611**
**B1**

(12) **EUROPEAN PATENT SPECIFICATION**

(45) Date of publication of patent specification: **17.12.86**

(21) Application number: **81306114.0**

(22) Date of filing: **23.12.81**

(51) Int. Cl.⁴: **F 02 D 29/02, B 60 K 31/00**

�civilian Priority → ㊚ System for detecting the neutral state of a vehicle engine transmission.

| | |
|---|---|
| (30) Priority: **27.12.80 JP 187175/80** | (73) Proprietor: **FUJI JUKOGYO KABUSHIKI KAISHA**<br>**7-2 Nishishinjuku 1-chome Shinjuku-ku**<br>**Tokyo (JP)** |
| (43) Date of publication of application:<br>**07.07.82 Bulletin 82/27** | |
| (45) Publication of the grant of the patent:<br>**17.12.86 Bulletin 86/51** | (72) Inventor: **Hara, Kazuo**<br>**2-5-11-203, Yahatacho**<br>**Musashino-shi Tokyo (JP)**<br>Inventor: **Abe, Kunihiro**<br>**4-22-11, Akitsu**<br>**Higashimurayama-shi Tokyo (JP)** |
| (84) Designated Contracting States:<br>**AT DE GB SE** | |
| (56) References cited:<br>**AU-B- 481 723**<br>**FR-A-2 365 704**<br>**US-A-3 814 224**<br>**US-A-4 237 833** | (74) Representative: **Kirk, Geoffrey Thomas**<br>**BATCHELLOR, KIRK & EYLES 2 Pear Tree Court**<br>**Farringdon Road**<br>**London EC1R 0DS (GB)** |

Courier Press, Leamington Spa, England.

## Description

The present invention relates to a system for detecting the neutral state of a vehicle engine transmission.

Engine speed control systems for controlling engine speed are known. Such a system is, for example, used to control idling speed to a desired value by adjusting the amount of air or the amount of the air-fuel mixture to be inducedin the engine in dependency on an error signal which is the difference between a desired reference idling speed and the detected idling speed. In such an automatic engine speed control system, it is necessary to be able to detect when the transmission is in the neutral state.

A conventional neutral state detecting system comprises a clutch switch provided adjacent to a clutch pedal of the vehicle and a neutral switch provided adjacent to a clutch pedal of the vehicle and a neutral switch provided in the transmission. The neutral state detecting system operates to judge the neutral state of the transmission from the two signals obtained by those switches and to produce a neutral signal.

However, because a neutral switch is provided in the transmission, that switch is complicated in construction and is expensive.

It is known from FR—A—2365704 to correct air-fuel ratio control quantity by a gear-ratio-dependent parameter, which is determined in response to a ratio of engine speed to gear box output shaft speed. The ratio is achieved by dividing a signal related to engine speed by a signal related to gear box output shaft speed.

An object of the present invention is to provide a neutral state detecting system which detects the neutral state reliably and which is simple in construction.

According to the present invention, a system for detecting a neutral state of a transmission for an engine mounted on a vehicle, the transmission having a plurality of transmission ratios dependent on gears of the transmission, the system comprising: an engine speed detecting means for producing a pulsed output signal with repetition rate in proportion to the engine speed; a vehicle speed detecting means for producing a pulsed output signal with repetition rate in proportion to the vehicle speed; an electric circuit for judging whether the ratio of the engine speed output signal to the vehicle speed output signal is in a range of transmission ratios dependent on said transmission; the electric circuit comprising: a first counter means for counting output pulses from the engine speed detecting means and for producing a first signal upon counting a predetermined number of the pulses, a first circuit means responsive to each output pulse from the vehicle speed detecting means for producing a second signal for controlling a respective period of operation of the first counter means, a second counter means for counting output pulses from the vehicle speed detecting means and for producing a third signal upon counting a predetermined number of output pulses from the vehicle speed detecting means, a second circuit means responsive to each output pulse from the engine speed detecting means for producing a fourth signal for controlling a respective period of operation of the second counter means, and third and fourth circuit means for the first counter and first circuit means, and the second counter and second circuit means respectively, and responsive to the first and second signals, and to the third and fourth signals respectively for producing one of two neutral state output signals in dependence on the result of the counts during the said counter operating periods, when the transmission ratio is outside of the said range of transmission ratios.

The invention will be more readily understood by way of example for the following description of a system for detecting the neutral condition of a transmission, reference being made to the accompanying drawings, in which:

Figure 1 is a schematic diagram showing an engine control system;

Figure 2 is an electric circuit of a neutral state detection system; and

Figure 3 is a graph for explaining the operational principle.

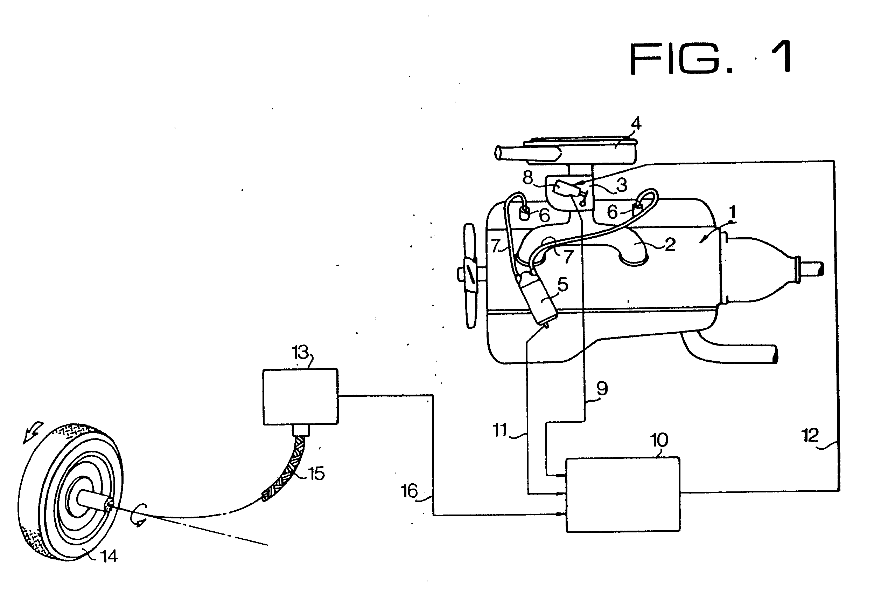

Referring to Figure 1, an internal combustion engine 1 mounted on a vehicle is provided with an intake manifold 2, a carburettor 3, an air cleaner 4, an ignition coil 5, and spark plugs 6 each connected to the ignition coil through a lead 7. An actuator 8 for operating a throttle valve in the carburettor is supported on the side wall of the carburettor 3. The actuator 8 includes an idling sensing switch. An idling signal produced by the idling sensing switch in the actuator 8 is sent to a control circuit 10 by a lead 9. Pulses produced in synchronism with the ignition pulses are also supplied to the control circuit 10 through a lead 11. The output of the control circuit 10 is connected to the actuator 8 by a lead 12.

A vehicle speed sensor 13 is connected to an axle for a front wheel 14 by a speedometer cable 15. The output of the vehicle speed sensor 13 is applied to the control circuit 10 by a lead 16.

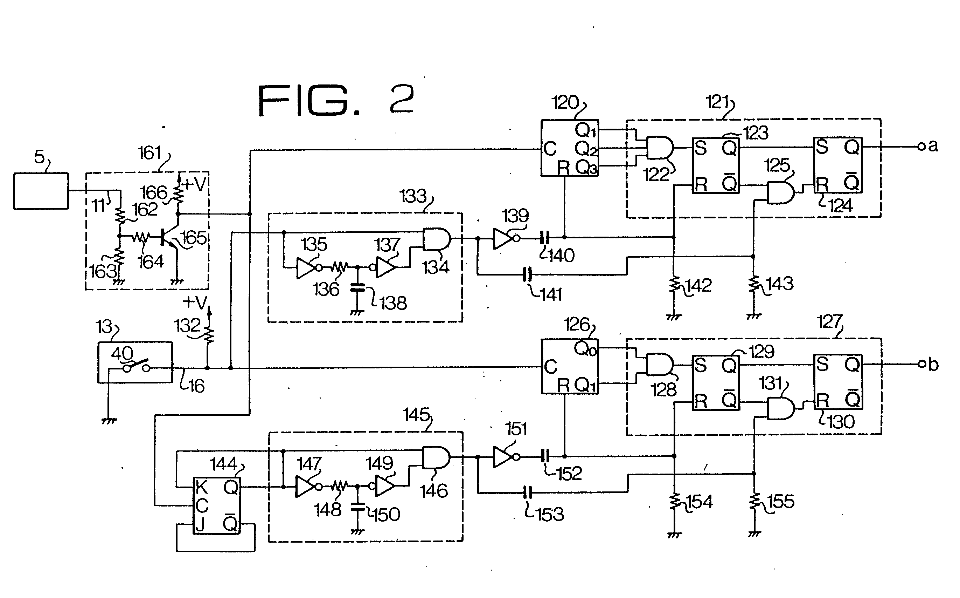

Referring to Figure 2 showing a neutral state detecting circuit, an upper circuit portion of the circuit is an operation circuit for neutral state of A zone and a lower circuit portion is an operation circuit for neutral state of B zone. The output of the ignition coil 5 is connected to a waveform shaping circuit 161. The waveform shaping circuit 161 comprises a transistor 165 and resistors 162, 163, 164 and 166. The output of the waveform shaping circuit 161 is connected to a clock input C of a counter 120. Outputs $Q_1$ and $Q_2$ and $Q_3$ of the counter 120 are applied to an AND gate 122 of a first neutral state judging circuit 121. The output of the AND gate 122 is connected to an S input of a flip-flop 123, Q output of which is in turn connected to an S input of a flip-flop 124. The $\overline{Q}$ output of the flip-flop 123 is connected to the R input of flip-flop 124 through an AND gate 125.

A reed switch 40 connected to the positive source via the resistor 132 is connected to a clock input C of a counter 126. Outputs $Q_0$, $Q_1$ of the counter 126 are connected to an S input of a flip-flop 129 through an AND gate 128 of a second neutral state judging circuit 127. The Q output of the flip-flop 129 is connected to an S input of a flip-flop and $\overline{Q}$ output of the flip-flop 129 is connected to R input of the flip-flop 130 through an AND gate 131.

The reed switch 40 is also connected to a one-shot multivibrator 133. The one-shot multivibrator 133 comprises an AND gate 134, inverters 135, 137, resistor 136, and capacitor 138. The output of the AND gate 134 is connected to the R input of the counter 120 and to the R input of the flip-flop 123 through an inverter 139 and a capacitor 140. Further, the output of the AND gate 134 is connected to the AND gate 125 through a capacitor 141. Both capacitors 140, 141 are grounded through resistors 142, 143, respectively.

The output of the waveform shaping circuit 161 is also connected to a clock input C of a J-K flip-flop 144. The Q output of the flip-flop 144 is connected to an AND gate 146 and to an inverter 147 of a one-shot multivibrator 145. The one-shot multivibrator 145 comprises a resistor 148, inverter 149 and capacitor 150 in addition to the AND gate 146 and inverter 147. The output of the one-shot multivibrator 145 is connected to the R input of the counter 126 and to the R input of the flip-flop 129 through an inverter 151 and capacitor 152. Further, the output of the one-shot multivibrator 145 is connected to the AND gate 131 via a capacitor 153. Capacitors 152 and 153 are grounded via resistors 154 and 155, respectively.

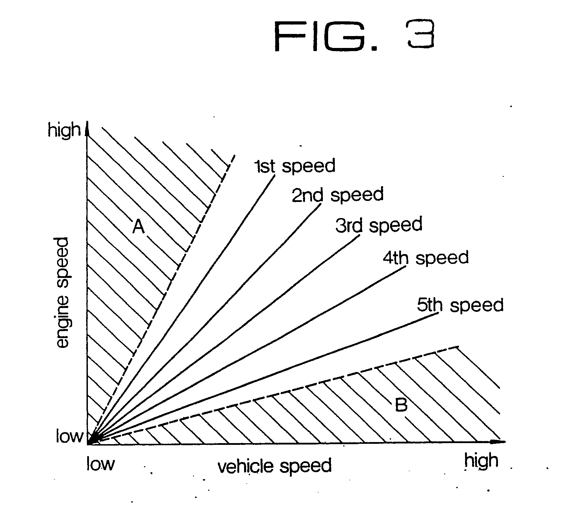

Now describing the operation of detecting the neutral state, (Figure 2), when the vehicle is driven by the engine 1, the vehicle speed varies with the engine speed at a ratio in dependency on the existing transmission ratio of the transmission. Figure 3 shows the relationship between the engine speed and the vehicle speed. It will be seen from the graph that A zone and B zone are ranges in which the vehicle speed is not proportional to the engine speed. In other words, A and B zones are out of the transmission ratio range, that is, engine-speed to vehicle-speed ratio is excessively high in the A zone and is excessively low in the B zone. Therefore, when the point decided by the engine speed and the vehicle speed is in the A zone or B zone, the engine output transmission system is cut off, that is the transmission is in neutral state.

In the system of Figure 2, the neutral state of A zone is detected by counting ignition pulses from the engine speed sensor 5 in the period of each pulse from the vehicle speed sensor (reed switch 40). When the numbers of the ignition pulses is greater than a predetermined number, the system judges that the point by the engine speed and the vehicle speed is in the A zone as will be described hereinafter.

Ignition pulses shaped by the waveform shaping circuit 161 is counted by the counter 120. When the counter 120 counts fourteen pulses, $Q_1$,

$Q_2$, $Q_3$ outputs go to high level causing the AND gate 122 to produce an output to set the flip-flop 123.

On the other hand, the vehicle speed signal pulse from the reed switch 40 operates the one-shot multivibrator 133 to produce an output pulse having a predetermined width. The output pulse of the one-shot multivibrator 133 is differentiated by the capacitor 141 and resistor 143. The triangular pulse produced by differentiating the positive going voltage of the output pulse is applied to the AND gate 125 to reset the flip-flop 124. In addition, the negative going voltage of the output pulse of the one-shot multivibrator 133 is differentiated by the capacitor 140 and resistor 142 and resets the counter 120 and the flip-flop 123. Thus, the counter 120 and flip-flop are reset with a time lag corresponding to the width of the output pulse.

Describing operation of the first neutral state judging circuit 121, under the power transmitting condition, the engine speed signal and the vehicle speed signal are in a proportional relation. Therefore the counter 120 is reset by the output signal of the one-shot multivibrator 133 before the counter counts fourteen ignition pulses from the engine speed sensor 5. When the transmission is in the neutral state, the counter 120 counts fourteen pulses before being reset causing the AND gate 122 to produce an output which sets flip-flops 123 and 124. Thus, the flip-flop 124 produces an output $a$ as A zone signal. When the output pulse of the one-shot multivibrator 133 goes to a low level and the reset is produced at the capacitor 140, the counter 120 and flip-flop 123 are reset. Although Q output of the flip-flop 123 goes to a high level, the other input of the AND gate 125 is at low level. Accordingly, the flip-flop 124 continues to produce the A zone output $a$. When the output of the one-shot multivibrator 133 goes to a high level and the reset pulse is applied to the AND gate 125, the flip-flop 124 is reset and the A zone output signal $a$ disappears. On the other hand, the counter 120 starts to count after the reset pulse from the capacitor 140.

The operation of the B zone neutral state detecting circuit is similar to that of the A zone neutral state detecting circuit. In the system for the B zone, B zone is detected by counting the vehicle speed signal pulses during an ignition pulse. When the counter 126 counts three pulses, $Q_0$ and $Q_1$ outputs go to high levels causing the AND gate 128 to produce a high level output. On the other hand, when an ignition pulse is applied to the one-shot multivibrator 145 through the flip-flop 144, an output is produced for a predetermined period. The output is differentiated by capacitors 152, 153 resistors 154, 155, outputs of which actuate to reset the counter 126, flip-flops 129, 130. When the reset signals are generated after the three counting of the counter 126, a B zone neutral state signal $b$ is produced from the Q output of the flip-flop 130. If the reset operations are performed before the three counting, the B zone neutral signal $b$ is not generated. In other words, the engine speed is proportional to the vehicle speed.

Thus, in accordance with the present invention, the neutral state of the transmission can be reliably detected.

### Claim

A system for detecting a neutral state of a transmission for an engine mounted on a vehicle, the transmission having a plurality of transmission ratios dependent on gears of the transmission, the system comprising: an engine speed detecting means (5, 161) for producing a pulsed output signal with repetition rate in proportion to the engine speed; a vehicle speed detecting means (13) for producing a pulsed output signal with repetition rate in proportion to the vehicle speed; an electric circuit (Figure 2) for judging whether the ratio of the engine speed output signal to the vehicle speed output signal is in a range of the transmission ratios dependent on said transmission; the electric circuit (Figure 2) comprising: a first counter means (120) for counting output pulses from the engine speed detecting means (5, 161) and for producing a first signal upon counting a predetermined number of the pulses, a first circuit means (133) responsive to each output pulse from the vehicle speed detecting means (13) for producing a second signal for controlling a respective period of operation of the first counter means (120), a second counter means (126) for counting output pulses from the vehicle speed detecting means (13) and for producing a third signal upon counting a predetermined number of output pulses from the vehicle speed detecting means (13), a second circuit means (144, 145) responsive to each output pulse from the engine speed detecting means (5, 161) for producing a fourth signal for controlling a respective period of operation of the second counter means (126), and third and fourth circuit means (121, 127) for the first counter (120) and first circuit (133) means, and the second counter (126) and second circuit (144, 145) means respectively, and responsive to the first and second signals, and to the third and fourth signals respectively for producing one of two neutral state output signals in dependence on the result of the counts during the said counter operating periods, when the transmission ratio is outside of the said range of transmission ratios.

### Patentanspruch

System zum Ermitteln der Neutralstellung einer Kraftübertragung für den Motor eines Fahrzeuges, welches Getriebe in den Gängen verschiedene Untersetzungsverhältnisse aufweist, gekennzeichnet durch eine Motordrehzahlsensoranordnung (5, 161) zum Erzeugen eines impulsförmigen Ausgangssignals mit einer Wiederholungsfrequenz proportional zur Motordrehzahl; eine Fahrzeuggeschwindigkeitssensoranordnung (13) zum Erzeugen eines impulsförmigen Ausgangssignals mit einer Wiederholungsfrequenz proportional zur Fahrzeuggeschwindigkeit; eine elektrische Schaltung (Fig. 2) zur Entscheidung, ob das Verhältnis von Motordrehzahl-Ausgangssignal zum Fahrzeuggeschwindigkeits-Ausgangssignal im Bereich der Untersetzungsverhältnisse der Kraftübertragung liegt; welche elektrische Schaltung (Fig. 2) gekennzeichnet ist durch eine erste Zählerschaltung (120) zum Zählen der Ausgangsimpulse der Motordrehzahlsensoranordnung (5, 161) und zum Erzeugen eines ersten Signals nach dem Zählen einer bestimmten Anzahl von Impulsen; eine erste Schaltungseinheit (133), die auf jeden Ausgangsimpuls der Fahrzeuggeschwindigkeitssensoranordnung (13) anspricht und ein zweites Signal zum Steuern einer entsprechenden Arbeitsperiode der ersten Zählerschaltung (120) erzeugt; eine zweite Zählerschaltung (126) zum Zählen der Ausgangsimpulse der Fahrzeuggeschwindigkeitssensoranordnung (13) und zum Erzeugen eines dritten Signals nach dem Zählen einer bestimmten Anzahl von Ausgangsimpulsen der Fahrzeuggeschwindigkeitssensoranordnung (13); eine zweite Schaltungseinheit (144, 145), die auf jeden Ausgangsimpuls der Motorodrehzahlsensoranordnung (5, 161) anspricht und ein viertes Signal zum Steuern einer entsprechenden Arbeitsperiode der zweiten Zählerschaltung (126) erzeugt; und dritte sowie vierte Schaltungseinheiten (121, 127) für die erste Zählerschaltung (120) und die erste Schaltungseinheit (133) bzw. die zweite Zählerschaltung (126) und die zweite Schaltungseinheit (144, 145), die auf die ersten und zweiten Signale bzw. die dritten und vierten Signale ansprechen, um eines der beiden die Neutralstellung anzeigenden Ausgangssignale abhängig von den Zählergebnissen während der Arbeitsperioden der Zählerschaltungen zu erzeugen, wenn das Untersetzungsverhältnis außerhalb der Bereiche der Untersetzungsverhältnisse liegt.

### Revendication

Dispositif pour détecter qu'une transmission associé à un moteur monté sur un véhicule est en position neutre, c'est-à-dire, au point mort, ladite transmission ayant plusieurs rapports d'engrenages, le dispositif comprenant des moyens pour détecter la vitesse du moteur (5, 161) afin de produire un signal de sortie pulsé dont la cadence de répétition est proportionnelle à la vitesse du moteur; des moyens pour détecter la vitesse du véhicule (13) afin de produire un signal de sortie pulsé dont la cadence de répétition est proportionnelle à la vitesse du véhicule; un circuit électrique (Figure 2) pour juger si le rapport du signal de sortie indiquant la vitesse du moteur sur le signal de sortie représentant la vitesse du véhicule est dans une plage de rapports qui dépendent de ladite transmission; le circuit électrique (figure 2) comprenant un premier compteur (120) pour compter les impulsions de sortie des moyens détectant la vitesse du moteur (5, 161) et pour produire un premier signal après avoir compté un nombre prédéterminé d'impulsions, un premier circuit (133) qui, en réponse à chaque impulsion de sortie des moyens détectant la vitesse du véhicule (133) produit un second signal pour commander l'une des périodes respectives de fonctionnement du premier compteur (120), un second compteur (126) pour compter les impulsions de sortie des moyens détectant la vitesse du véhicule (13) et pour produire un troisième signal après avoir compté un nombre prédéterminé d'impulsions de sortie des moyens détectant la vitesse du véhicule (13), un second circuit (144, 145) pour produire un quatrième signal afin de commander l'une des périodes respectives de fonctionnement du second compteur (126), et un troisième et un quatrième circuits (121, 127) respectivement pour le premier compteur (120) et le premier circuit (133) et pour le second compteur (126) et le second circuit (144, 145) respectivement, et qui, en réponse aux premiers et aux seconds signaux, et aux troisièmes et aux quatrièmes signaux produisent respectivement l'un ou l'autre de deux signaux de sortie indiquant la position neutre selon le résultat des comptages effectués durant lesdites périodes de fonctionnement des compteurs, quand ledit rapport de transmission est en dehors de ladite plage de rapports de transmission.

# FIG. 1

0 055 611

FIG. 2

0 055 611

FIG. 3

0 055 611

3